# EUROPÄISCHE PATENTSCHRIFT

(11) **EP 4 211 523 B1**
(45) Veröffentlichungstag und Bekanntmachung des Hinweises auf die Patenterteilung: **15.07.2026**
(21) Anmeldenummer: 21745962.7
(22) Anmeldetag: 15.07.2021
(51) Int. Cl.: G05D 1/00

(54) **VERFAHREN ZUM TEILAUTOMATISIERTEN FÜHREN EINES KRAFTFAHRZEUGS**
METHOD FOR GUIDING A MOTOR VEHICLE IN A PARTLY AUTOMATED MANNER
PROCÉDÉ DE GUIDAGE D'UN VÉHICULE AUTOMOBILE DE MANIÈRE PARTIELLEMENT AUTOMATISÉE

(30) Priorität: 14.09.2020 DE 102020211484
(43) Veröffentlichungstag der Anmeldung: 19.07.2023
(73) Patentinhaber: Robert Bosch GmbH, 70442 Stuttgart (DE)
(72) Erfinder: NORDBRUCH, Stefan, 71229 Leonberg (DE)
(86) Internationale Anmeldenummer: PCT/EP2021/069727
(87) Internationale Veröffentlichungsnummer: WO 2022/053207

(56) Entgegenhaltungen:
- US-A1- 2018 095 457

## Beschreibung

Die Erfindung betrifft ein Verfahren zum sicheren, mittels einer Infrastruktur gestützten, zumindest teilautomatisierten Führen eines Kraftfahrzeugs. Die Erfindung betrifft weiter eine Vorrichtung, ein Computerprogramm und ein maschinenlesbares Speichermedium.

### Stand der Technik

Die Offenlegungsschrift US 2018/0095457 A1 offenbart ein Verfahren zum Fernsteuern eines Kraftfahrzeugs.

Die Offenlegungsschrift DE 10 2013 001 326 A1 offenbart einen Kraftwagen, welcher dazu ausgelegt ist, mit einem in einer Umgebung des Kraftwagens befindlichen Verkehrsobjekt Betriebsdaten auszutauschen und hierdurch ein Fahrmanöver des Kraftwagens mit dem Verkehrsobjekt abzustimmen.

### Offenbarung der Erfindung

Die der Erfindung zugrunde liegende Aufgabe ist darin zu sehen, ein effizientes Konzept zum effizienten sicheren, mittels einer Infrastruktur gestützten, zumindest teilautomatisierten Führen eines Kraftfahrzeugs bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem ersten Aspekt wird ein Verfahren zum sicheren, mittels einer Infrastruktur gestützten, zumindest teilautomatisierten Führen eines Kraftfahrzeugs bereitgestellt, wobei während des infrastrukturgestützten zumindest teilautomatisierten Führens des Kraftfahrzeugs Steuersignale zum zumindest teilautomatisierten Steuern einer Quer- und/oder Längsführung des Kraftfahrzeugs ohne Infrastrukturunterstützung erzeugt werden und eine Funktionsfähigkeit einer Unterstützung durch die Infrastruktur für ein zumindest teilautomatisiertes Führen des Kraftfahrzeugs überprüft wird, wobei abhängig von einem Ergebnis des Überprüfens das infrastrukturgestützte zumindest teilautomatisierte Führen des Kraftfahrzeugs beendet wird und die Steuersignale ausgegeben werden, um das Kraftfahrzeug basierend auf den erzeugten ausgegebenen Steuersignalen ohne Unterstützung der Infrastruktur zumindest teilautomatisiert zu führen.

Nach einem zweiten Aspekt wird eine Vorrichtung bereitgestellt, die eingerichtet ist, alle Schritte des Verfahrens nach dem ersten Aspekt auszuführen.

Nach einem dritten Aspekt wird ein Computerprogramm bereitgestellt, welches Befehle umfasst, die bei Ausführung des Computerprogramms durch einen Computer, beispielsweise durch die Vorrichtung nach dem zweiten Aspekt, diesen veranlassen, ein Verfahren gemäß dem ersten Aspekt auszuführen.

Nach einem vierten Aspekt wird ein maschinenlesbares Speichermedium bereitgestellt, auf dem das Computerprogramm nach dem dritten Aspekt gespeichert ist.

Die Erfindung basiert auf der Erkenntnis und schließt diese mit ein, dass die obige Aufgabe dadurch gelöst werden kann, dass während das Kraftfahrzeug infrastrukturgestützt zumindest teilautomatisiert geführt wird, Steuersignale zum zumindest teilautomatisierten Steuern einer Quer- und/oder Längsführung des Kraftfahrzeugs erzeugt werden, wobei diese Steuersignale jedoch ohne eine Unterstützung durch die Infrastruktur erzeugt werden.

Somit stehen also als ein Rückfallmechanismus Steuersignale zur Verfügung, die bei einem Ausfall oder einer eingeschränkten Funktionsfähigkeit der Unterstützung durch die Infrastruktur verwendet werden können, um das Kraftfahrzeug basierend auf diesen Steuersignalen zumindest teilautomatisiert zu führen.

Somit können zum Beispiel in vorteilhafter Weise ein Ausfall bzw. eine Einschränkung der Funktionsfähigkeit der Unterstützung durch die Infrastruktur effizient kompensiert werden.

Dadurch können weiter zum Beispiel kritische Situationen für das Kraftfahrzeug bzw. für Objekte im Umfeld bzw. in der Umgebung des Kraftfahrzeugs vermieden werden.

Das hier beschriebene Konzept basiert also insbesondere darauf, dass parallel neben der Verwendung der Unterstützung durch die Infrastruktur die Durchführung der Fahraufgabe ohne diese Unterstützung durch die Infrastruktur im Kraftfahrzeug durchgeführt wird, ohne dass jedoch diese Durchführung dieser Fahraufgabe real umgesetzt wird, solange die Unterstützung durch die Infrastruktur zumindest teilweise sichergestellt ist. Die Durchführung der Fahraufgabe im Kraftfahrzeug ohne die Unterstützung durch die Infrastruktur findet somit zunächst derart statt, dass zwar für die Durchführung der Fahraufgabe notwendige Steuersignale zum zumindest teilautomatisierten Steuern der Quer- und/oder Längsführung des Kraftfahrzeugs erzeugt werden, diese jedoch zunächst noch nicht ausgegeben werden.

Das Kraftfahrzeug kann somit zum einen infrastrukturgestützt zumindest teilautomatisiert geführt werden. Zum anderen kann es auch Kraftfahrzeug-zentriert zumindest teilautomatisiert geführt werden. Kraftfahrzeug-zentriert bedeutet hier insbesondere, dass das Kraftfahrzeug auf Basis der kraftfahrzeugintern generierten bzw. erzeugten Daten zumindest teilautomatisiert geführt wird.

Zum Beispiel werden die Steuersignale auf Basis der Umfeldsensordaten der Umfeldsensoren des Kraftfahrzeugs erzeugt und nicht auf Basis von Infrastrukturumfeldsensordaten von Infrastrukturumfeldsensoren, welche räumlich verteilt innerhalb einer Umgebung des Kraftfahrzeugs angeordnet sind.

Ein infrastrukturgestütztes zumindest teilautomatisiertes Führen eines Kraftfahrzeugs bedeutet insbesondere, dass das Kraftfahrzeug zumindest teilautomatisiert basierend auf Infrastrukturdaten geführt wird.

Diese Infrastrukturdaten werden dem Kraftfahrzeug insbesondere mittels der Infrastruktur zur Verfügung gestellt.

Infrastrukturdaten umfassen zum Beispiel Handlungsanweisungen an das Kraftfahrzeug.

Infrastrukturdaten umfassen zum Beispiel Informationen über ein Umfeld bzw. eine Umgebung des Kraftfahrzeugs.

Infrastrukturdaten umfassen zum Beispiel Sensordaten von einem oder von mehreren Umfeldsensoren, die räumlich verteilt innerhalb der Infrastruktur angeordnet ist.

In einer Ausführungsform ist ein Umfeldsensor oder sind mehrere Umfeldsensoren an einem jeweiligen Infrastrukturelement der Infrastruktur angeordnet. Ein Infrastrukturelement ist zum Beispiel eines der folgenden Infrastrukturelemente: Straßenlaterne, Verkehrsschild, Verkehrsschilderbrücke, Strommast, Brücke, Gebäude.

In einer Ausführungsform ist ein Umfeldsensor einer der folgenden Umfeldsensoren: Lidar-Sensor, Radarsensor, Ultraschallsensor, Magnetfeldsensor, Infrarotsensor und/oder Bewegungssensor. Insbesondere können unterschiedliche Umfeldsensoren verwendet werden. Das weist insbesondere den technischen Vorteil einer Redundanz und einer Diversität auf.

Infrastrukturdaten umfassen zum Beispiel eine Soll-Trajektorie, welche das Kraftfahrzeug zumindest teilautomatisiert geführt abfahren soll.

Infrastrukturdaten umfassen zum Beispiel Wetterdaten im Umfeld bzw. in der Umgebung des Kraftfahrzeugs.

Infrastrukturgestützt bedeutet also insbesondere, dass die Infrastruktur dem Kraftfahrzeug Daten, vorliegend die Infrastrukturdaten, zur Verfügung stellt, basierend auf welchen das Kraftfahrzeug zumindest teilautomatisiert geführt wird respektive geführt werden kann.

Infrastrukturdaten umfassen zum Beispiel Steuerbefehle zum zumindest teilautomatisierten Steuern einer Quer- und/oder Längsführung des Kraftfahrzeugs.

Das heißt also, dass unter Verwendung solcher Steuerbefehle das Kraftfahrzeug mittels der Infrastruktur ferngesteuert wird respektive werden kann.

Das heißt also insbesondere, dass die Infrastruktur unter Verwendung von solchen Steuerbefehlen das Kraftfahrzeug fernsteuert respektive fernsteuern kann.

Das heißt also, dass das Kraftfahrzeug durch die Infrastruktur basierend auf solchen Steuerbefehlen gefahren werden kann respektive gefahren wird.

Ein sicheres, zumindest infrastrukturgestütztes, zumindest teilautomatisiertes Führen eines Kraftfahrzeugs bedeutet insbesondere, dass eine Wahrscheinlichkeit für einen Unfall bzw. eine Kollision des Kraftfahrzeugs kleiner oder kleiner-gleich einem vorbestimmten Wahrscheinlichkeitsschwellwert ist. Sicher bedeutet also insbesondere, dass in einem Fehlerfall bzw. bei einem Auftreten eines Problems während des infrastrukturgestützten zumindest teilautomatisierten Führens des Kraftfahrzeugs dennoch ein Unfall bzw. eine Kollision des Kraftfahrzeugs kleiner oder kleiner-gleich einem vorbestimmten Wahrscheinlichkeitsschwellwert ist bzw. reduziert ist.

Die Formulierung "zumindest teilautomatisiertes Führen" umfasst einen oder mehrere der folgenden Fälle: assistiertes Führen, teilautomatisiertes Führen, hochautomatisiertes Führen, vollautomatisiertes Führen.

Assistiertes Führen bedeutet, dass ein Fahrer des Kraftfahrzeugs dauerhaft entweder die Quer- oder die Längsführung des Kraftfahrzeugs ausführt. Die jeweils andere Fahraufgabe (also ein Steuern der Längs- oder der Querführung des Kraftfahrzeugs) wird automatisch durchgeführt. Das heißt also, dass bei einem assistierten Führen des Kraftfahrzeugs entweder die Quer- oder die Längsführung automatisch gesteuert wird.

Teilautomatisiertes Führen bedeutet, dass in einer spezifischen Situation (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) und/oder für einen gewissen Zeitraum eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss aber das automatische Steuern der Längs- und Querführung dauerhaft überwachen, um bei Bedarf manuell eingreifen zu können. Der Fahrer muss jederzeit zur vollständigen Übernahme der Kraftfahrzeugführung bereit sein.

Hochautomatisiertes Führen bedeutet, dass für einen gewissen Zeitraum in einer spezifischen Situation (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss das automatische Steuern der Längs- und Querführung nicht dauerhaft überwachen, um bei Bedarf manuell eingreifen zu können. Bei Bedarf wird automatisch eine Übernahmeaufforderung an den Fahrer zur Übernahme des Steuerns der Längs- und Querführung ausgegeben, insbesondere mit einer ausreichenden Zeitreserve ausgegeben. Der Fahrer muss also potenziell in der Lage sein, das Steuern der Längs- und Querführung zu übernehmen. Grenzen des automatischen Steuerns der Quer- und Längsführung werden automatisch erkannt. Bei einem hochautomatisierten Führen ist es nicht möglich, in jeder Ausgangssituation automatisch einen risikominimalen Zustand herbeizuführen.

Vollautomatisiertes Führen bedeutet, dass in einer spezifischen Situation (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss das automatische Steuern der Längs- und Querführung nicht überwachen, um bei Bedarf manuell eingreifen zu können. Vor einem Beenden des automatischen Steuerns der Quer- und Längsführung erfolgt automatisch eine Aufforderung an den Fahrer zur Übernahme der Fahraufgabe (Steuern der Quer- und Längsführung des Kraftfahrzeugs), insbesondere mit einer ausreichenden Zeitreserve. Sofern der Fahrer nicht die Fahraufgabe übernimmt, wird automatisch in einen risikominimalen Zustand zurückgeführt. Grenzen des automatischen Steuerns der Quer- und Längsführung werden automatisch erkannt. In allen Situationen ist es möglich, automatisch in einen risikominimalen Systemzustand zurückzuführen.

Nach einer Ausführungsform ist vorgesehen, dass das Überprüfen der Funktionsfähigkeit der Unterstützung durch die Infrastruktur ein Überprüfen von für das zumindest teilautomatisierte Führen des Kraftfahrzeugs bestimmte Infrastrukturdaten auf Korrektheit und/oder Plausibilität umfasst, so dass das Ergebnis angibt, ob die Infrastrukturdaten korrekt und/oder plausibel sind.

Dadurch wird zum Beispiel der technische Vorteil bewirkt, dass ein Ausfall bzw. eine Einschränkung der Funktionsfähigkeit effizient erkannt werden können.

Zum Beispiel ist vorgesehen, dass, wenn das Ergebnis angibt, dass die Infrastrukturdaten korrekt und/oder plausibel sind, dann entschieden bzw. bestimmt wird, dass das Kraftfahrzeug weiter infrastrukturgestützt zumindest teilautomatisiert geführt wird.

Zum Beispiel ist vorgesehen, dass, wenn das Ergebnis angibt, dass die Infrastrukturdaten nicht korrekt und/oder nicht plausibel sind, dann das infrastrukturgestützte zumindest teilautomatisierte Führen des Kraftfahrzeugs beendet wird und die Steuersignale ausgegeben werden.

Nach einer Ausführungsform ist vorgesehen, dass, wenn das Ergebnis des Überprüfens angibt, dass die Funktionsfähigkeit eingeschränkt oder ausgefallen ist, dann das infrastrukturgestützte zumindest teilautomatisierte Führen des Kraftfahrzeugs beendet wird und die Steuersignale ausgegeben werden.

Gemäß einer Ausführungsform ist vorgesehen, dass die Steuersignale derart erzeugt werden, dass das Kraftfahrzeug basierend auf den ausgegebenen Steuersignalen in einem eingeschränkten Fahrmodus zumindest teilautomatisiert geführt wird, in welchem nur ein eingeschränkter Funktionsumfang hinsichtlich eines zumindest teilautomatisierten Führens bereitgestellt wird, oder in einem nicht-eingeschränkten Fahrmodus zumindest teilautomatisiert geführt wird, in welchem ein voller Funktionsumfang hinsichtlich eines zumindest teilautomatisierten Führens bereitgestellt wird.

Dadurch wird zum Beispiel der technische Vorteil bewirkt, dass das Kraftfahrzeug sicher zumindest teilautomatisiert geführt werden kann auch ohne eine Unterstützung durch die Infrastruktur.

Nach einer Ausführungsform ist vorgesehen, dass in dem eingeschränkten Fahrmodus eine maximal zulässige Kraftfahrzeuggeschwindigkeit kleiner ist als in dem nicht-eingeschränkten Fahrmodus.

Dadurch wird zum Beispiel der technische Vorteil bewirkt, dass ein Unfallrisiko bzw. ein Kollisionsrisiko des Kraftfahrzeugs aufgrund der kleineren maximal zulässigen Kraftfahrzeuggeschwindigkeit reduziert sein kann.

Nach einer Ausführungsform ist vorgesehen, dass in dem eingeschränkten Fahrmodus eine maximal zulässige Kraftfahrzeugbeschleunigung kleiner ist als in dem nicht-eingeschränkten Fahrmodus.

Dadurch wird zum Beispiel der technische Vorteil bewirkt, dass ein Unfallrisiko bzw. ein Kollisionsrisiko des Kraftfahrzeugs aufgrund der kleineren maximal zulässigen Kraftfahrzeugbeschleunigung reduziert sein kann.

Nach einer Ausführungsform ist vorgesehen, dass in dem eingeschränkten Fahrmodus kein Spurwechsel durchgeführt werden darf.

Dadurch wird zum Beispiel der technische Vorteil bewirkt, dass ein Unfallrisiko bzw. ein Kollisionsrisiko des Kraftfahrzeugs aufgrund dessen, dass kein Spurwechsel durchgeführt werden darf, reduziert sein kann.

In einer Ausführungsform ist vorgesehen, dass in dem eingeschränkten Fahrmodus ein größerer Abstand zu einem sich in Fahrtrichtung des Kraftfahrzeugs vor dem Kraftfahrzeug befindendes Objekt größer ist als in dem nicht-eingeschränkten Fahrmodus. Das sich in Fahrtrichtung des Kraftfahrzeugs vor dem Kraftfahrzeug befindendes Objekt ist zum Beispiel ein vorausfahrendes Objekt. Das Objekt ist zum Beispiel ein weiteres Kraftfahrzeugs, insbesondere ein vorausfahrendes weiteres Kraftfahrzeug. Das Objekt ist zum Beispiel Fahrradfahrer, insbesondere ein vorausfahrender Fahrradfahrer. Ein Objekt ist zum Beispiel ein Fußgänger, insbesondere ein vorausgehender Fußgänger.

Durch den größeren Abstand wird zum Beispiel der technische Vorteil bewirkt, dass eine Reaktionszeit größer sein kann verglichen mit einem geringeren Abstand.

In einer Ausführungsform ist vorgesehen, dass vor einem Beenden des infrastrukturgestützten zumindest teilautomatisierten Führens des Kraftfahrzeugs und des Ausgebens der erzeugten Steuersignale der Schritt des Überprüfens der Funktionsfähigkeit der Unterstützung durch die Infrastruktur mehrfach durchgeführt wird, wobei erst nach mehrfacher Durchführung des Schritts des Überprüfens der Funktionsfähigkeit der Unterstützung durch die Infrastruktur abhängig von einem oder mehreren jeweiligen Ergebnissen des mehrfachen Überprüfens der Funktionsfähigkeit der Unterstützung durch die Infrastruktur entschieden wird, ob das infrastrukturgestützte zumindest teilautomatisierte Führen des Kraftfahrzeugs beendet wird und die erzeugten Steuersignale ausgegeben werden.

Dadurch wird zum Beispiel der technische Vorteil bewirkt, dass ein temporärer Ausfall bzw. eine temporäre Einschränkung der Funktionsfähigkeit effizient detektiert werden kann, wobei ein solch temporärer Ausfall dann nicht zwangsläufig zu einem Beenden des infrastrukturgestützten zumindest teilautomatisierten Führens des Kraftfahrzeugs führen muss.

Gemäß einer Ausführungsform ist vorgesehen, dass, wenn das Ergebnis des Überprüfens der Funktionsfähigkeit der Unterstützung durch die Infrastruktur einen Ausfall der Funktionsfähigkeit oder eine Einschränkung der Funktionsfähigkeit angibt, überprüft wird, ob der Ausfall oder die Einschränkung eine Auswirkung auf das zumindest teilautomatisierte Führen des Kraftfahrzeugs haben, wobei abhängig von einem Ergebnis des Überprüfens, ob der Ausfall oder die Einschränkung eine Auswirkung auf das zumindest teilautomatisierte Führen des Kraftfahrzeugs haben, das infrastrukturgestützte zumindest teilautomatisierte Führen des Kraftfahrzeugs beendet wird und die Steuersignale ausgegeben werden.

Dadurch wird zum Beispiel der technische Vorteil bewirkt, dass das Kraftfahrzeug effizient zumindest teilautomatisiert geführt werden kann.

Insbesondere wenn das Ergebnis des Überprüfens, ob der Ausfall oder die Einschränkung eine Auswirkung auf das zumindest teilautomatisierte Führen des Kraftfahrzeugs haben wird, angibt, dass der Ausfall oder die Einschränkung keine Auswirkung auf das zumindest teilautomatisierte Führen des Kraftfahrzeugs haben, wird das infrastrukturgestützte zumindest teilautomatisierte Führen des Kraftfahrzeugs fortgesetzt.

Dadurch wird weiter zum Beispiel der technische Vorteil bewirkt, dass es so immer noch mehr Informationen (Infrastrukturdaten) gibt, als wenn das Kraftfahrzeug nur auf kraftfahrzeuginterne Daten bzw. Informationen fährt. Dadurch kann zum Beispiel eine höherer Komfort und/oder eine höhere Sicherheit bewirkt werden.

Nach einer Ausführungsform ist vorgesehen, dass ein oder mehrere Verfahrensschritte dokumentiert, insbesondere in einer Blockchain dokumentiert, werden.

Dadurch wird zum Beispiel der technische Vorteil bewirkt, dass auch nach Durch- oder Ausführung des Verfahrens dieses nachträglich analysiert werden kann aufgrund der Dokumentation. Das Dokumentieren in einer Blockchain weist insbesondere den technischen Vorteil auf, dass die Dokumentation manipulations- und fälschungssicher ist.

Eine Blockchain (auch Block Chain, englisch für Blockkette) ist insbesondere eine kontinuierlich erweiterbare Liste von Datensätzen, "Blöcke" genannt, die mittels eines oder mehrerer kryptographischer Verfahren miteinander verkettet sind. Jeder Block enthält dabei insbesondere einen kryptographisch sicheren Hash (Streuwert) des vorhergehenden Blocks, insbesondere einen Zeitstempel und insbesondere Transaktionsdaten.

Nach einer Ausführungsform ist vorgesehen, dass das Verfahren nach dem ersten Aspekt ein computerimplementiertes Verfahren ist.

Nach einer Ausführungsform ist vorgesehen, dass das Verfahren gemäß dem ersten Aspekt mittels der Vorrichtung nach dem zweiten Aspekt aus- oder durchgeführt wird.

Vorrichtungsmerkmale ergeben sich analog aus entsprechenden Verfahrensmerkmalen und umgekehrt. Das heißt also insbesondere, dass sich technische Funktionen der Vorrichtung nach dem zweiten Aspekt analog aus entsprechenden technischen Funktionalitäten des Verfahrens nach dem ersten Aspekt und umgekehrt ergeben.

Die Formulierung "zumindest ein(e)" steht insbesondere für "ein(e) oder mehrere".

Die Abkürzung "bzw." steht für "beziehungsweise", was insbesondere für "respektive" steht.

Die Formulierung "respektive" steht insbesondere für "und/oder".

Ausführungsbeispiele der Erfindung sind in den Zeichnungen dargestellt und in der nachfolgenden Beschreibung näher erläutert. Es zeigen:
- Fig. 1: ein Ablaufdiagramm eines Verfahrens zum sicheren, mittels einer Infrastruktur gestützten, zumindest teilautomatisierten Führen eines Kraftfahrzeugs,
- Fig. 2: eine Vorrichtung,
- Fig. 3: ein maschinenlesbares Speichermedium,
- Fig. 4: einen ersten Tunnel und
- Fig. 5: einen zweiten Tunnel.

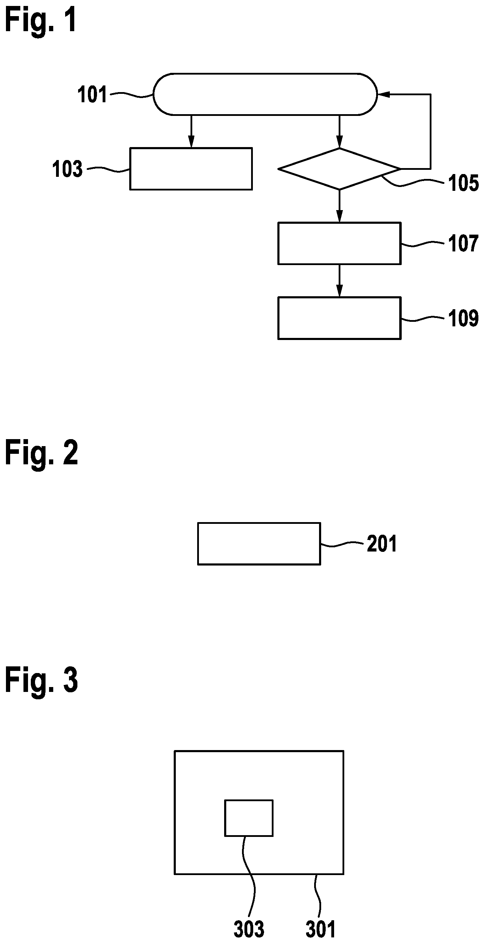

Fig. 1 zeigt ein Ablaufdiagramm eines Verfahrens zum sicheren, mittels einer Infrastruktur gestützten, zumindest teilautomatisierten Führen eines Kraftfahrzeugs.

Das Verfahren startet beim Block 101.

Während das Kraftfahrzeug infrastrukturgestützt zumindest teilautomatisiert geführt wird, ist gemäß einem Schritt 103 vorgesehen, dass Steuersignale zum zumindest teilautomatisierten Steuern einer Quer- und/oder Längsführung des Kraftfahrzeugs ohne Infrastrukturunterstützung erzeugt werden. Weiter ist während des infrastrukturgestützten zumindest teilautomatisierten Führens des Kraftfahrzeugs gemäß einem Schritt 105 vorgesehen, dass eine Funktionsfähigkeit einer Unterstützung durch die Infrastruktur für ein zumindest teilautomatisiertes Führen des Kraftfahrzeugs überprüft wird.

Sofern das Überprüfen 105 ergeben hat, dass die Funktionsfähigkeit nicht eingeschränkt bzw. voll gegeben ist, setzt das Verfahren beim Block 101 fort.

Anderenfalls ist gemäß einem Schritt 107 vorgesehen, dass das infrastrukturgestützte zumindest teilautomatisierte Führen des Kraftfahrzeugs beendet wird.

Weiter ist dann vorgesehen, dass gemäß einem Schritt 109 die erzeugten Steuersignale ausgegeben werden, um das Kraftfahrzeug basierend auf den ausgegebenen Steuersignalen ohne Unterstützung der Infrastruktur zumindest teilautomatisiert zu führen.

In einer Ausführungsform umfasst das Verfahren nach dem ersten Aspekt ein Steuern der Quer- und/oder Längsführung des Kraftfahrzeugs basierend auf den ausgegebenen Steuersignalen.

In einer Ausführungsform umfasst das Verfahren nach dem ersten Aspekt das infrastrukturgestützte zumindest teilautomatisierte Führen des Kraftfahrzeugs.

Fig. 2 zeigt eine Vorrichtung 201.

Die Vorrichtung 201 ist eingerichtet, alle Schritte des Verfahrens nach dem ersten Aspekt auszuführen.

Fig. 3 zeigt ein maschinenlesbares Speichermedium 301.

Auf dem maschinenlesbaren Speichermedium 301 ist ein Computerprogramm 303 gespeichert. Das Computerprogramm 303 umfasst Befehle, die bei Ausführung des Computerprogramms 303 durch einen Computer diesen veranlassen, ein Verfahren gemäß dem ersten Aspekt auszuführen.

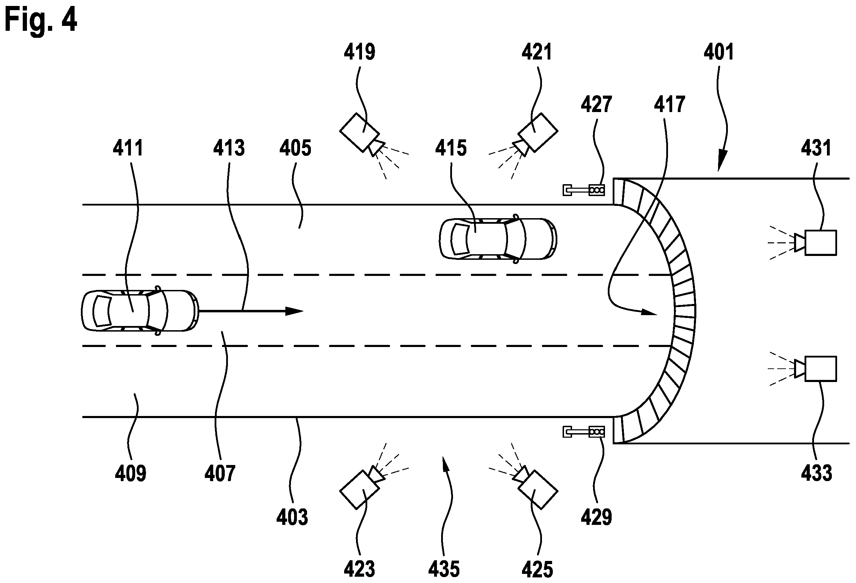

Fig. 4 zeigt einen ersten Tunnel 401, durch welchen eine Straße 403 führt.

Die Straße 403 weist eine erste Fahrspur 405, eine zweite Fahrspur 407 und eine dritte Fahrspur 409 auf.

Auf der mittleren Fahrspur 407 fährt ein erstes Kraftfahrzeug 411. Eine Fahrtrichtung des ersten Kraftfahrzeugs 411 ist mit einem Pfeil mit dem Bezugszeichen 413 gekennzeichnet.

Auf der vom ersten Kraftfahrzeug 411 sich befindenden linken Fahrspur 405 fährt voraus ein zweites Kraftfahrzeug 415.

Im Umfeld bzw. in der Umgebung eines Eingangs 417 des ersten Tunnels 401 sind eine erste Videokamera 419, eine zweite Videokamera 421, eine dritte Videokamera 423 und eine vierte Videokamera 425 räumlich verteilt angeordnet.

Die erste Videokamera 419 und die dritte Videokamera 423 erfassen den Eingang 417 und zum Beispiel zumindest einen Bereich im ersten Tunnel 401, welcher hinter dem Eingang 417 liegt.

Die zweite Videokamera 421 und die vierte Videokamera 425 erfassen eine Umgebung des Eingangs 417, wobei diese beiden Videokameras weg vom Eingang 417 gerichtet sind, wohingegen die erste Videokamera 419 und die dritte Videokamera 423 in Richtung des Eingangs 417 ausgerichtet sind.

Weiter befindet sich links neben dem Eingang 417 eine erste Lichtsignalanlage 427 und befindet sich rechts neben dem Eingang 417 eine zweite Lichtsignalanlage 429.

Im ersten Tunnel 401 selbst befindet sich eine fünfte Videokamera 431 und befindet sich eine sechste Videokamera 433, die zwar von außerhalb des ersten Tunnels 401 nicht sichtbar sind, dennoch sind diese beiden Videokameras 431, 433 für eine bessere Veranschaulichung gezeichnet. Diese beiden Videokameras 431, 433 sind in Richtung des Eingangs 417 ausgerichtet und erfassen einen entsprechenden Bereich innerhalb des ersten Tunnels 401.

Die entsprechenden Videosignale bzw. Videobilder dieser Kameras können zum Beispiel an das erste Kraftfahrzeug 411 und/oder an das zweite Kraftfahrzeug 415 als ein Beispiel für Infrastrukturdaten gesendet werden.

Weiter kann gemäß einer Ausführungsform vorgesehen sein, dass die Videobilder dieser Videokameras analysiert werden, um potentielle Probleme, zum Beispiel Kollisionsobjekte, zum Beispiel einen Stau innerhalb des ersten Tunnels 401, zu erkennen.

Ein Ergebnis dieser Analyse kann gemäß einer Ausführungsform als ein Beispiel für Infrastrukturdaten an das erste respektive zweite Kraftfahrzeug 411, 415 gesendet werden.

Weiter kann gemäß einer Ausführungsform vorgesehen sein, dass basierend auf einer Analyse der Videobilder die beiden Lichtsignalanlagen 427, 429 betrieben werden.

So kann zum Beispiel vorgesehen sein, die beiden Lichtsignalanlagen 427, 429 derart zu steuern, dass diese ein rotes Signalbild aussenden, sofern ein Problem, zum Beispiel ein Kollisionsobjekt, zum Beispiel ein Stau innerhalb des ersten Tunnels 401, detektiert wurde.

Zum Beispiel kann gemäß einer Ausführungsform vorgesehen sein, ein momentanes Signalbild der beiden Lichtsignalanlagen 427, 429 als ein Beispiel für Infrastrukturdaten an das erste Kraftfahrzeug 411, respektive an das zweite Kraftfahrzeug 415, zu senden.

Basierend auf den beispielhaften Infrastrukturdaten, wie vorstehend ausgeführt, können die beiden Kraftfahrzeuge 411, 415 zum Beispiel zumindest teilautomatisiert geführt werden.

Insofern können diese beiden Kraftfahrzeuge 411, 415 infrastrukturgestützt zumindest teilautomatisiert bei einer Tunnelfahrt geführt werden.

Anstelle eines Tunnels können zum Beispiel folgende Infrastrukturelemente vorgesehen sein, durch welche ein Kraftfahrzeug in analoger Weise infrastrukturgestützt zumindest teilautomatisiert geführt werden soll: Baustelle, Brücke, Autobahnkreuz, Autobahnauffahrt, Autobahnabfahrt, Kreuzung, allgemein Knotenpunkt, insbesondere Knotenpunkt im urbanen Raum.

Die sechs Videokameras sowie die Lichtsignalanlage 427 und die Lichtsignalanlage 429 sind somit Teil einer Infrastruktur 435, mittels welcher ein Kraftfahrzeug zumindest teilautomatisiert durch den ersten Tunnel 401 geführt werden kann.

In einer nicht gezeigten Ausführungsform können anstelle oder zusätzlich zu den jeweiligen Videokameras ein oder mehrere der folgenden Umfeldsensoren verwendet werden: Lidar-Sensor, Radarsensor, Ultraschallsensor und/oder Bewegungssensor. Insbesondere können unterschiedliche Umfeldsensoren verwendet werden. Das weist insbesondere den technischen Vorteil einer Redundanz und einer Diversität auf.

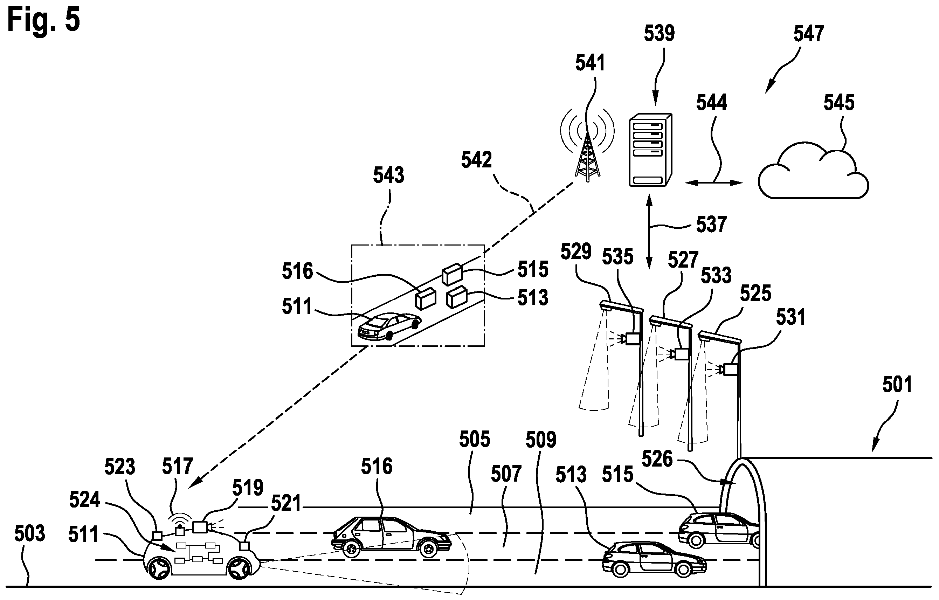

Fig. 5 zeigt einen zweiten Tunnel 501.

Eine Straße 503 führt durch den zweiten Tunnel 501.

Die Straße 503 weist eine erste Fahrspur 505, eine zweite Fahrspur 507 und eine dritte Fahrspur 509 auf.

Eine Fahrtrichtung für Kraftfahrzeuge, die auf der Straße 503 durch den zweiten Tunnel 501 fahren, verläuft bezogen auf die Papierebene von links nach rechts.

Bezogen auf diese Fahrtrichtung ist die erste Fahrspur 505 die linke Fahrspur und ist die zweite Fahrspur 507 die mittlere Fahrspur und ist die dritte Fahrspur 509 die rechte Fahrspur.

Auf der rechten Fahrspur 509 fährt ein erstes Kraftfahrzeug 511 und fährt ein zweites Kraftfahrzeug 513.

Auf der mittleren Fahrspur 507 fährt ein drittes Kraftfahrzeug 515 und fährt ein viertes Kraftfahrzeug 516.

Das erste Kraftfahrzeug 511 weist zum Beispiel folgende Komponenten bzw. Systeme auf: Kommunikationseinrichtung 517, dachseitige Videokamera 519, frontseitigen Radarsensor 521, rückseitigen Radarsensor 523.

Das Bezugszeichen 524 zeigt auf mehrere Vierecke, die vom ersten Kraftfahrzeug 511 umfasst sind, wobei diese mehreren Vierecke weitere Komponenten des Kraftfahrzeugs 511 symbolisieren sollen, zum Beispiel Aktoren, Sensoren, Steuerungsgeräte, die zum Beispiel benötigt werden, damit das Kraftfahrzeug 511 zumindest teilautomatisiert geführt werden kann.

Weiter sind im Umfeld eines Eingangs bzw. einer Einfahrt 526 des zweiten Tunnels 501 eine erste Straßenlaterne 525, eine zweite Straßenlaterne 527 und eine dritte Straßenlaterne 529 angeordnet.

An der ersten Straßenlaterne 525 ist eine erste Videokamera 531 angeordnet. An der zweiten Straßenlaterne 527 ist eine zweite Videokamera 533 angeordnet. An der dritten Straßenlaterne 529 ist eine dritte Videokamera 535 angeordnet.

In einer nicht gezeigten Ausführungsform sind die drei Videokameras an einem jeweiligen Infrastrukturelement angeordnet. Ein Infrastrukturelement ist zum Beispiel eines der folgenden Infrastrukturelemente: Straßenlaterne, Verkehrsschild, Verkehrsschilderbrücke.

In einer nicht gezeigten Ausführungsform können anstelle oder zusätzlich zu den jeweiligen Videokameras ein oder mehrere der folgenden Umfeldsensoren verwendet werden: Lidar-Sensor, Radarsensor, Ultraschallsensor und/oder Bewegungssensor. Insbesondere können unterschiedliche Umfeldsensoren verwendet werden. Das weist insbesondere den technischen Vorteil einer Redundanz und einer Diversität auf.

Diese drei Videokameras nehmen Videobilder der Einfahrt 526 bzw. einer Umgebung der Einfahrt 526 außerhalb des zweiten Tunnels 501 auf.

Die entsprechenden Videobilder werden über eine erste verschlüsselte Kommunikationsverbindung 437 an eine Datenverarbeitungseinrichtung 539 gesendet. Die Datenverarbeitungseinrichtung 539 analysiert diese Videobilder bzw. Videosignale und sendet zum Beispiel ein Ergebnis dieser Analyse mittels einer zweiten Kommunikationseinrichtung 541 über eine verschlüsselte Verbindung 542 an das erste Kraftfahrzeug 511.

Das Ergebnis der Analyse ist symbolisch mit dem Bezugszeichen 543 gekennzeichnet.

Es umfasst zum Beispiel eine Objektliste von Objekten, welche mittels der drei Videokameras erkannt wurden.

Zum Beispiel sind die erkannten bzw. detektierten Objekte in einem digitalen Umfeldmodell der Umgebung der Einfahrt 526 dargestellt.

Das Ergebnis dieser Analyse ist also ein Beispiel für Infrastrukturdaten, welche an das erste Kraftfahrzeug 511 gesendet werden, sodass das erste Kraftfahrzeug 511 basierend auf diesen Daten zumindest teilautomatisiert geführt durch den zweiten Tunnel 501 fahren kann.

Über eine dritte Kommunikationsverbindung 544 kommuniziert die Datenverarbeitungseinrichtung 539 zum Beispiel mit einer Cloud-Infrastruktur 545.

Die dritte Kommunikationsverbindung 544 kann ebenfalls eine verschlüsselte Kommunikationsverbindung sein.

In der Cloud-Infrastruktur 545 können zum Beispiel Analyseschritte einer Analyse der Videobilder durchgeführt werden.

Zum Beispiel kann die Cloud-Infrastruktur 545 Speicher zum Speichern von den Videobildern bereitstellen.

Insofern sind die drei Videokameras 531, 533, 535, die Datenverarbeitungseinrichtung 539 und die zweite Kommunikationseinrichtung 541 Teil einer Infrastruktur 547, welche das erste Kraftfahrzeug 511 bei einem zumindest teilautomatisierten Führen assistieren bzw. unterstützen kann.

Grundidee des hier beschriebenen Konzepts umfasst insbesondere ein Verfahren, mit dem die Sicherheit (auf Englisch: Safety) eines zumindest teilautomatisiert geführtes Kraftfahrzeug erhöht wird, welches auf Basis einer Infrastruktur die zumindest teilautomatisierte Fahraufgabe (mit Sicherheits-kritischen Aktionen, wie zum Beispiel Lenken, Bremsen, Ausweichen) erfüllen, in dem Fall, in welchem die Infrastruktur ungeplant nicht mehr (insbesondere korrekt/vollständig) zur Verfügung steht.

Das Konzept basiert insbesondere darauf, dass zum Beispiel parallel neben der Verwendung der Infrastruktur (Daten oder Kontrolle) die Durchführung der Fahraufgabe ohne die Infrastruktur (Daten oder Kontrolle) im Kraftfahrzeug durchgeführt wird.

In einer Ausführungsform wird die Fahraufgabe im Kraftfahrzeug im vollen Modus (alle Funktionalitäten) und in einer Ausführungsform in einem eingeschränkten Modus, z. B. ohne Komfortaspekte, durchgeführt.

Weiterhin wird nach einer Ausführungsform parallel überprüft, ob die Infrastruktur bzw. die Infrastrukturdaten zur Verfügung stehen und vorzugsweise korrekt/möglich/sinnvoll (,z. B. durch Querchecks mit der parallelen Methode, was zum Beispiel bedeutet, dass die ohne Unterstützung der Infrastruktur erzeugten Steuersignale verwendet werden, um die Infrastrukturdaten auf Plausibilität bzw. Korrektheit zu prüfen,) sind.

Im Fall, dass festgestellt wird, dass die Infrastruktur nicht zur Verfügung steht und/oder die Infrastrukturdaten nicht korrekt/möglich/sinnvoll sind, wird vom Kraftfahrzeug in einen Kraftfahrzeug-zentrierten Modus gewechselt, in welchem das Kraftfahrzeug basierend auf den kraftfahrzeugintern erzeugten Daten ohne Infrastrukturunterstützung zumindest teilautomatisiert geführt wird.

Vorzugsweise wird in einer Ausführungsform vor dem Wechsel die Prüfung mehrfach wiederholt, um ggf. einen temporären Ausfall zu detektieren.

Sollte der Ausfall keine Auswirkungen zur Folge haben, kann nach einer Ausführungsform die Infrastruktur weiterverwendet werden, zum Beispiel mit einer zusätzlichen Prüfung bzw. mit einer eingeschränkten Funktionalität.

Wird in den Kraftfahrzeug-zentrierten Modus gewechselt, wird vorzugsweise in einem solchen Fall die Funktionalität (die Fahraufgabe) reduziert.

Hintergrund ist, dass die Hinzunahme der Infrastruktur z. B. notwendig war und/oder zu einer besseren Performance beitragen sollte.

Eine Möglichkeit ist nach einer Ausführungsform z. B. die Reduzierung der Geschwindigkeit.

Eine weitere Möglichkeit ist nach einer Ausführungsform die Einleitung des kraftfahrzeugeigenen Fallbackmechanismus, also Rückfallmechanismus (z. B. den sicheren Zustand einleiten, insbesondere anhalten).

Eine weitere Möglichkeit ist nach einer Ausführungsform z. B. die Hinzunahme des Fahrers (wenn möglich).

Weiterhin wird in einem solchen Fall nach einer Ausführungsform vom Kraftfahrzeug die Infrastruktur und/oder andere Kraftfahrzeuge (insbesondere über V2X usw.) informiert, dass das Kraftfahrzeug aufgrund von Fehlern/Problemen nicht mehr auf Basis der Infrastruktur die Fahraufgabe durchführt, d. h., dass potentiell eine Gefahr vorliegt, die Information umfasst vorzugsweise eine Angabe der Probleme.

In einer weiteren Ausführungsform werden die Vorgänge fälschungssicher dokumentiert, z. B. mit Hilfe von Blockchains.

## Patentansprüche

1. Verfahren zum sicheren, mittels einer Infrastruktur (435, 547) gestützten, zumindest teilautomatisierten Führen eines Kraftfahrzeugs (411, 415, 511), wobei während des infrastrukturgestützten zumindest teilautomatisierten Führens des Kraftfahrzeugs (411, 415, 511) basierend auf Infrastrukturdaten, welche dem Kraftfahrzeug (411, 415, 511) mittels der Infrastruktur (435, 547) zur Verfügung gestellt werden, Steuersignale zum zumindest teilautomatisierten Steuern einer Quer- und/oder Längsführung des Kraftfahrzeugs (411, 415, 511) ohne Infrastrukturunterstützung erzeugt (103) werden und eine Funktionsfähigkeit einer Unterstützung durch die Infrastruktur (435, 547) für ein zumindest teilautomatisiertes Führen des Kraftfahrzeugs (411, 415, 511) überprüft (105) wird, wobei abhängig von einem Ergebnis des Überprüfens das infrastrukturgestützte zumindest teilautomatisierte Führen des Kraftfahrzeugs (411, 415, 511) beendet (107) wird und die Steuersignale ausgegeben (109) werden, um das Kraftfahrzeug (411, 415, 511) basierend auf den erzeugten ausgegebenen Steuersignalen ohne Unterstützung der Infrastruktur (435, 547) zumindest teilautomatisiert zu führen, sodass parallel neben der Verwendung der Unterstützung durch die Infrastruktur (435, 547) die Durchführung einer Fahraufgabe ohne diese Unterstützung durch die Infrastruktur (435, 547) im Kraftfahrzeug (411, 415, 511) durchgeführt wird, ohne dass jedoch diese Durchführung dieser Fahraufgabe real umgesetzt wird, solange die Unterstützung durch die Infrastruktur (435, 547) zumindest teilweise sichergestellt ist, sodass die Durchführung der Fahraufgabe im Kraftfahrzeug (411, 415, 511) ohne die Unterstützung durch die Infrastruktur (435, 547) somit zunächst derart stattfindet, dass zwar für die Durchführung der Fahraufgabe notwendige Steuersignale zum zumindest teilautomatisierten Steuern der Quer- und/oder Längsführung des Kraftfahrzeugs (411, 415, 511) erzeugt werden, diese jedoch zunächst noch nicht ausgegeben werden.

2. Verfahren nach Anspruch 1, wobei das Überprüfen der Funktionsfähigkeit der Unterstützung durch die Infrastruktur (435, 547) ein Überprüfen von für das zumindest teilautomatisierte Führen des Kraftfahrzeugs (411, 415, 511) bestimmte Infrastrukturdaten (543) auf Korrektheit und/oder Plausibilität umfasst, so dass das Ergebnis angibt, ob die Infrastrukturdaten (543) korrekt und/oder plausibel sind.

3. Verfahren nach Anspruch 1 oder 2, wobei die Steuersignale derart erzeugt werden, dass das Kraftfahrzeug (411, 415, 511) basierend auf den ausgegebenen Steuersignalen in einem eingeschränkten Fahrmodus zumindest teilautomatisiert geführt wird, in welchem nur ein eingeschränkter Funktionsumfang hinsichtlich eines zumindest teilautomatisierten Führens bereitgestellt wird, oder in einem nicht-eingeschränkten Fahrmodus zumindest teilautomatisiert geführt wird, in welchem ein voller Funktionsumfang hinsichtlich eines zumindest teilautomatisierten Führens bereitgestellt wird.

4. Verfahren nach Anspruch 3, wobei in dem eingeschränkten Fahrmodus eine maximal zulässige Kraftfahrzeuggeschwindigkeit kleiner ist als in dem nicht-eingeschränkten Fahrmodus.

5. Verfahren nach einem der vorherigen Ansprüche, wobei vor einem Beenden des infrastrukturgestützten zumindest teilautomatisierten Führens des Kraftfahrzeugs (411, 415, 511) und des Ausgebens der erzeugten Steuersignale der Schritt des Überprüfens der Funktionsfähigkeit der Unterstützung durch die Infrastruktur (435, 547) mehrfach durchgeführt wird, wobei erst nach mehrfacher Durchführung des Schritts des Überprüfens der Funktionsfähigkeit der Unterstützung durch die Infrastruktur (435, 547) abhängig von einem oder mehreren jeweiligen Ergebnissen des mehrfachen Überprüfens der Funktionsfähigkeit der Unterstützung durch die Infrastruktur (435, 547) entschieden wird, ob das infrastrukturgestützte zumindest teilautomatisierte Führen des Kraftfahrzeugs (411, 415, 511) beendet wird und die erzeugten Steuersignale ausgegeben werden.

6. Verfahren nach einem der vorherigen Ansprüche, wobei, wenn das Ergebnis des Überprüfens der Funktionsfähigkeit der Unterstützung durch die Infrastruktur (435, 547) einen Ausfall der Funktionsfähigkeit oder eine Einschränkung der Funktionsfähigkeit angibt, überprüft wird, ob der Ausfall oder die Einschränkung eine Auswirkung auf das zumindest teilautomatisierte Führen des Kraftfahrzeugs (411, 415, 511) haben, wobei abhängig von einem Ergebnis des Überprüfens, ob der Ausfall oder die Einschränkung eine Auswirkung auf das zumindest teilautomatisierte Führen des Kraftfahrzeugs (411, 415, 511) haben, das infrastrukturgestützte zumindest teilautomatisierte Führen des Kraftfahrzeugs (411, 415, 511) beendet wird und die Steuersignale ausgegeben werden.

7. Verfahren nach einem der vorherigen Ansprüche, wobei ein oder mehrere Verfahrensschritte dokumentiert, insbesondere in einer Blockchain dokumentiert, werden.

8. Vorrichtung (201) für ein Kraftfahrzeug (411, 415, 511), die eingerichtet ist, alle Schritte des Verfahrens nach einem der vorherigen Ansprüche auszuführen.

9. Computerprogramm (303), umfassend Befehle, die bei Ausführung des Computerprogramms (303) durch eine Vorrichtung (201) für ein Kraftfahrzeug (411, 415, 511) diese veranlassen, ein Verfahren gemäß einem der Ansprüche 1 bis 7 auszuführen.

10. Maschinenlesbares Speichermedium (301), auf dem das Computerprogramm (303) nach Anspruch 9 gespeichert ist.

## Claims

1. Method for safely guiding a motor vehicle (411, 415, 511) in an at least partially automated manner and with the assistance of an infrastructure (435, 547), wherein, during the infrastructure-assisted at least partially automated guidance of the motor vehicle (411, 415, 511) based on infrastructure data made available to the motor vehicle (411, 415, 511) by means of the infrastructure (435, 547), control signals for the at least partially automated control of lateral and/or longitudinal guidance of the motor vehicle (411, 415, 511) without infrastructure assistance are generated (103) and a functionality of assistance by the infrastructure (435, 547) for at least partially automated guidance of the motor vehicle (411, 415, 511) is checked (105), wherein, depending on a result of the checking, the infrastructure-assisted at least partially automated guidance of the motor vehicle (411, 415, 511) is terminated (107) and the control signals are output (109) in order to guide the motor vehicle (411, 415, 511) in an at least partially automated manner without assistance by the infrastructure (435, 547) based on the generated output control signals, so that, in addition to using the assistance by the infrastructure (435, 547), a driving task is performed in parallel in the motor vehicle (411, 415, 511) without this assistance by the infrastructure (435, 547), but without this performance of this driving task being actually implemented as long as the assistance by the infrastructure (435, 547) is at least partially ensured, with the result that the driving task is therefore initially performed in the motor vehicle (411, 415, 511) without the assistance by the infrastructure (435, 547) in such a way that, although control signals necessary for performing the driving task are generated for the at least partially automated control of the lateral and/or longitudinal guidance of the motor vehicle (411, 415, 511), they are initially not yet output.

2. Method according to Claim 1, wherein the checking of the functionality of the assistance by the infrastructure (435, 547) comprises checking infrastructure data (543) intended for the at least partially automated guidance of the motor vehicle (411, 415, 511) for correctness and/or plausibility, so that the result indicates whether the infrastructure data (543) are correct and/or plausible.

3. Method according to Claim 1 or 2, wherein the control signals are generated such that the motor vehicle (411, 415, 511) is guided in an at least partially automated manner based on the output control signals in a restricted driving mode in which only a limited range of functions with regard to at least partially automated guidance is provided, or is guided in an at least partially automated manner in a non-restricted driving mode in which a full range of functions with regard to at least partially automated guidance is provided.

4. Method according to Claim 3, wherein a maximum permissible motor vehicle speed is lower in the restricted driving mode than in the non-restricted driving mode.

5. Method according to one of the preceding claims, wherein, before terminating the infrastructure-assisted at least partially automated guidance of the motor vehicle (411, 415, 511) and outputting the generated control signals, the step of checking the functionality of the assistance by the infrastructure (435, 547) is carried out repeatedly, wherein a decision is made, only after repeatedly carrying out the step of checking the functionality of the assistance by the infrastructure (435, 547), depending on one or more respective results of the repeated checking of the functionality of the assistance by the infrastructure (435, 547), whether the infrastructure-assisted at least partially automated guidance of the motor vehicle (411, 415, 511) is terminated and the generated control signals are output.

6. Method according to one of the preceding claims, wherein, when the result of checking the functionality of the assistance by the infrastructure (435, 547) indicates a failure of the functionality or a restriction of the functionality, a check is carried out in order to determine whether the failure or the restriction has an effect on the at least partially automated guidance of the motor vehicle (411, 415, 511), wherein, depending on a result of checking whether the failure or the restriction has an effect on the at least partially automated guidance of the motor vehicle (411, 415, 511), the infrastructure-assisted at least partially automated guidance of the motor vehicle (411, 415, 511) is terminated and the control signals are output.

7. Method according to one of the preceding claims, wherein one or more method steps are documented, in particular in a blockchain.

8. Apparatus (201) for a motor vehicle (411, 415, 511) that is configured to carry out all the steps of the method according to one of the preceding claims.

9. Computer program (303) comprising instructions which, when the computer program (303) is executed by an apparatus (201) for a motor vehicle (411, 415, 511), cause said apparatus to carry out a method according to one of Claims 1 to 7.

10. Machine-readable storage medium (301) on which the computer program (303) according to Claim 9 is stored.

## Revendications

1. Procédé destiné à conduire en toute sécurité un véhicule automobile (411, 415, 511) de manière au moins en partie automatisée avec un support au moyen d'une infrastructure (435, 547), des signaux de commande destinés à commander de manière au moins en partie automatisée une conduite transversale et/ou longitudinale du véhicule automobile (411, 415, 511) sans support d'infrastructure étant générés (103) pendant la conduite du véhicule automobile (411, 415, 511) de manière au moins en partie automatisée avec un support d'infrastructure sur la base de données d'infrastructure, qui sont fournies au véhicule automobile (411, 415, 511) au moyen de l'infrastructure (435, 547) et un fonctionnement d'un support par l'infrastructure (435, 547) pour une conduite au moins en partie automatisée du véhicule automobile (411, 415, 511) étant vérifié (105), la conduite au moins en partie automatisée avec support d'infrastructure du véhicule automobile (411, 415, 511) étant interrompue (107) en fonction d'un résultat de la vérification et les signaux de commande étant émis (109) pour conduire de manière au moins en partie automatisée le véhicule automobile (411, 415, 511) sur la base des signaux de commande émis générés sans le support de l'infrastructure (435, 547) si bien que, parallèlement à l'utilisation du support par l'infrastructure (435, 547), la réalisation d'une tâche de conduite est effectuée sans ce support par l'infrastructure (435, 547) dans le véhicule automobile (411, 415, 511), mais sans que ladite réalisation de ladite tâche de conduite ne soit mise en œuvre réellement, tant que le support par l'infrastructure (435, 547) est assuré au moins en partie si bien que la réalisation de la tâche de conduite dans le véhicule automobile (411, 415, 511) a lieu ainsi d'abord sans le support par l'infrastructure (435, 547) de telle manière que des signaux de commande certes nécessaires à la réalisation de la tâche de conduite pour la commande au moins en partie automatisée de la conduite transversale et/ou longitudinale du véhicule automobile (411, 415, 511) sont générés, toutefois ceux-ci ne sont d'abord pas encore émis.

2. Procédé selon la revendication 1, la vérification du fonctionnement du support par l'infrastructure (435, 547) comprenant une vérification de l'exactitude et/ou de la plausibilité de données d'infrastructure (543) destinées à la conduite au moins en partie automatisée du véhicule automobile (411, 415, 511), de telle sorte que le résultat indique si les données d'infrastructure (543) sont correctes et/ou plausibles.

3. Procédé selon la revendication 1 ou 2, les signaux de commande étant générés de telle manière que le véhicule automobile (411, 415, 511) est conduit de manière au moins en partie automatisée sur la base des signaux de commande émis dans un mode de conduite limité, dans lequel n'est fourni qu'un éventail de fonctions limité en ce qui concerne la conduite au moins en partie automatisée, ou est conduit de manière au moins en partie automatisée dans un mode de conduite non limité, dans lequel un éventail de fonctions complet est fourni en ce qui concerne une conduite au moins en partie automatisée.

4. Procédé selon la revendication 3, une vitesse maximale admissible de véhicule automobile étant, dans le mode de conduite limité, inférieure à celle dans le mode de conduite non limité.

5. Procédé selon l'une des revendications précédentes, l'étape de la vérification du fonctionnement du support par l'infrastructure (435, 547) étant effectuée à plusieurs reprises avant que la conduite au moins en partie automatisée avec un support d'infrastructure du véhicule automobile (411, 415, 511) et l'émission des signaux de commande générés ne soient interrompues, le fait de savoir si la conduite au moins en partie automatisée avec un support d'infrastructure du véhicule automobile (411, 415, 511) est interrompue et que les signaux de commande générés sont émis n'étant décidé qu'après que l'étape de la vérification du fonctionnement du support par l'infrastructure (435, 547) a été effectuée à plusieurs reprises en fonction d'un ou de plusieurs résultats respectifs de la vérification répétée du fonctionnement du support par l'infrastructure (435, 547).

6. Procédé selon l'une des revendications précédentes, le fait de savoir si la défaillance ou la limitation ont un impact sur la conduite au moins en partie automatisée du véhicule automobile (411, 415, 511) étant vérifié lorsque le résultat de la vérification du fonctionnement du support par l'infrastructure (435, 547) indique une défaillance du fonctionnement ou une limitation du fonctionnement, la conduite au moins en partie automatisée avec un support d'infrastructure du véhicule automobile (411, 415, 511) étant interrompue et les signaux de commande étant émis en fonction d'un résultat de la vérification pour savoir si la défaillance ou la limitation ont un impact sur l'au moins une conduite au moins en partie automatisée du véhicule automobile (411, 415, 511).

7. Procédé selon l'une des revendications précédentes, une ou plusieurs étapes de procédé étant documentées, en particulier étant documentées dans une chaîne de blocs.

8. Dispositif (201) pour un véhicule automobile (411, 415, 511), qui est mis au point pour exécuter toutes les étapes du procédé selon l'une des revendications précédentes.

9. Programme informatique (303), comprenant des instructions qui, lorsque le programme informatique (303) est exécuté par un dispositif (201) pour un véhicule automobile (411, 415, 511), amènent celui-ci à exécuter un procédé selon la revendication 1 à 7.

10. Support de stockage (301) lisible par machine, sur lequel est stocké le programme informatique (303) selon la revendication 9.
